# EUROPÄISCHE PATENTSCHRIFT

(11) **EP 3 932 984 B1**
(45) Veröffentlichungstag und Bekanntmachung des Hinweises auf die Patenterteilung: **17.05.2023**
(21) Anmeldenummer: 20212114.1
(22) Anmeldetag: 07.12.2020
(51) Int. Cl.: C08L 9/00, B60C 1/00, B60C 11/00, C08L 9/06, C08L 21/00

(54) **FAHRZEUGLUFTREIFEN**
PNEUMATIC TYRE
PNEUMATIQUE DE VÉHICULE

(30) Priorität: 30.06.2020 DE 102020208165
(43) Veröffentlichungstag der Anmeldung: 05.01.2022
(73) Patentinhaber: Continental Reifen Deutschland GmbH, 30165 Hannover (DE)
(72) Erfinder: Eichhorst, Christoph, 30419 Hannover (DE); Puppa, Marion, 30419 Hannover (DE); Sà, Catarina, 30419 Hannover (DE)
(74) Vertreter: Continental Corporation

(56) Entgegenhaltungen:
- EP-A1- 2 065 221
- EP-A1- 3 098 264
- EP-A1- 3 424 750

## Beschreibung

Die Erfindung betrifft einen Fahrzeugluftreifen mit zumindest einem Body-Bauteil, welches eine Kautschukmischung aufweist.

Da die Eigenschaften eines Reifens, insbesondere Fahrzeugluftreifens, in einem großen Umfang von den verwendeten Kautschukzusammensetzungen für die unterschiedlichen Bauteile des Reifens abhängig sind, werden besonders hohe Anforderungen an die Zusammensetzung der Kautschukmischungen gestellt. So wurden vielfältige Versuche unternommen, die Eigenschaften des Reifens durch die Variation der Polymerkomponenten, der Füllstoffe und der sonstigen Zuschlagstoffe in den Kautschukmischungen positiv zu beeinflussen. Dabei muss man berücksichtigen, dass eine Verbesserung in der einen Reifen- und/oder Mischungseigenschaft oft eine Verschlechterung einer anderen Eigenschaft mit sich bringt, so ist eine Verbesserung des Abriebverhaltens üblicherweise mit einer Verschlechterung anderer gewünschter Mischungseigenschaften wie Zugfestigkeit oder Reißeigenschaften verbunden.

Um Reifen- und/oder Mischungseigenschaften positiv zu beeinflussen, ist es z. B. bekannt, lösungspolymerisierte Styrol-Butadien-Copolymere mit unterschiedlicher Mikrostruktur einzusetzen. Außerdem lassen sich Styrol-Butadien-Copolymere modifizieren, indem z. B. die Styrol- und Vinyl-Anteile variiert und Endgruppenmodifizierungen, Kopplungen oder Hydrierungen vorgenommen werden. Die verschiedenen Copolymertypen haben unterschiedlichen Einfluss auf die Vulkanisat- und damit auch auf die Reifeneigenschaften.

Aus der EP 0 775 725 B1 ist es bekannt, Kautschukmischungen für Laufstreifen von Fahrzeugreifen mit gutem Nassgriff, guter Verarbeitbarkeit und geringem Rollwiderstand bereitzustellen, die partiell hydrierte Styrol-Butadien-Copolymere, Kieselsäure und Silan-Kupplungsagenzien enthalten. Die in der EP 0 775 725 B1 offenbarten Styrol-Butadien-Copolymere weisen Hydrierungsgrade bis 80 % auf.

In der EP 2 092 013 B1 werden Kautschukmischungen für Laufstreifen von Fahrzeugluftreifen mit gutem Nassgriff, geringem Rollwiderstand und guten Wintereigenschaften offenbart, die 30 bis 80 phr zumindest eines teilweise hydrierten lösungspolymerisierten Styrol-Butadien-Copolymers mit einem Hydrierungsgrad von mehr als 30 % aufweist. Konkret werden Styrol-Butadien-Copolymere mit einem Hydrierungsgrad von 35 und 67 % beschrieben.

Der vorgenannte Stand der Technik betrifft Kautschukmischungen für Laufstreifen von Fahrzeugluftreifen. An Laufstreifenmischungen werden jedoch andere Anforderungen hinsichtlich Mischungszusammensetzung und Mischungs- bzw. Vulkanisateigenschaften gestellt als an Kautschukmischungen für die sogenannten Body-Bauteile eines Fahrzeugluftreifens. Zu den Body-Bauteilen eines Reifens, also den Bauteilen, die den "Körper" des Reifens bilden, zählen alle Bauteile des Reifens mit Ausnahme des Laufstreifens. Body- Bauteile sind beispielsweise die Gummierungen des Wulstkerns, der Wulstabdeckungen, der Wulstverstärker, des Gürtels, der Karkasse oder der Gürtelbandagen, aber auch andere festigkeitsträgernahe Mischungen wie Kernreiter, Squeegee, Gürtelkantenpolster, Schulterpolster, Seitenwände und Laufstreifenunterplatten.

Der Erfindung die Aufgabe zugrunde, einen Fahrzeugluftreifen mit Body-Bauteilen aus Kautschukmischungen bereitzustellen, der sich durch verbesserte Eigenschaften insbesondere im Hinblick auf den Abrieb des Body-Bauteils oder der Body-Bauteile auszeichnet.

Gelöst wird die Aufgabe erfindungsgemäß dadurch, dass zumindest ein Body-Bauteil, eine Kautschukmischung aufweist, die
- 10 - 100 phr zumindest eines hydrierten lösungspolymerisierten Styrol-Butadien-Copolymers mit einem Hydrierungsgrad von mehr als 90 %,
- bis zu 90 phr zumindest eines weiteren Dienkautschuks und
- 20 - 80 phr zumindest eines Füllstoffes enthält, wobei zu den Body-Bauteilen eines Reifens alle Bauteile des Reifens mit Ausnahme des Laufstreifens zählen.

Body-Bauteile eines Reifens gemäß dieser Erfindung sind Bauteile, die den "Körper" des Reifens bilden. Dazu zählen alle Bauteile des Reifens mit Ausnahme des Laufstreifens. Body- Bauteile sind beispielsweise die Gummierungen des Wulstkerns, der Wulstabdeckungen, der Wulstverstärker, des Gürtels, der Karkasse oder der Gürtelbandagen, aber auch andere festigkeitsträgernahe Mischungen wie Kernreiter, Squeegee, Gürtelkantenpolster, Schulterpolster, Seitenwände und Laufstreifenunterplatten.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Unter Hydrierungsgrad eines Kautschukes ist das Verhältnis der hydrierten Doppelbindungen zu den nicht hydrierten Doppelbindungen zu verstehen. Aromatische Doppelbindungen der Styrolbausteine werden dabei nicht berücksichtigt.

Überraschenderweise wurde gefunden, dass durch den Einsatz eines hydrierten lösungspolymerisierten Styrol-Butadien-Copolymers mit einem sehr hohen Hydrierungsgrad von mehr als 90 % in Mischungen mit einem geringen Füllstoffanteil von 20 bis 80 phr das Abriebverhalten deutlich verbessert werden kann. Dies war keinesfalls zu erwarten, da üblicherweise ein niedriger Füllgrad mit einer höheren Menge an Abrieb bei den Vulkanisaten und damit einem schlechteren Abriebverhalten verbunden ist.

Gleichzeitig weisen die Body-Bauteile die Vorteile eines niedrigen Verlustfaktors tan δ bei 55 ° (Prediktor für einen niedrigen Rollwiderstand) und eine hohe Zugfestigkeit auf.

Die Kautschukmischung des Body-Bauteils enthält 10 - 100 phr, vorzugsweise 20 bis 80 phr, zumindest eines hydrierten lösungspolymerisierten Styrol-Butadien-Copolymers mit einem Hydrierungsgrad von mehr als 90 %, die nach dem Fachmann bekannten Polymerisations- und Hydrierungsverfahren hergestellt werden können. Es können auch mehrere hydrierte lösungspolymerisierte Styrol-Butadien-Copolymere im Verschnitt eingesetzt werden.

Besonders gute Ergebnisse hinsichtlich des Abriebverhaltens können erzielt werden, wenn das hydrierte lösungspolymerisierte Styrol-Butadien-Copolymer einen Hydrierungsgrad von mehr als 95 % aufweist.

Für besonders gute Vulkanisat- und Reifeneigenschaften hat es sich als vorteilhaft erwiesen, wenn das hydrierte lösungspolymerisierte Styrol-Butadien-Copolymer eine Styrol-Anteil von 5 bis 40 Gew.-% aufweist. Die Bestimmung des Styrol-Gehaltes erfolgt mittels ¹³C-NMR (Lösungsmittel: Deuterochloroform CDCl₃; NMR: engl. "nuclear magnetic resonance") und Abgleich mit Daten aus der Infrarot-Spektrometrie (IR; FT-IR Spektrometer der Firma Nicolet, KBr-Fenster 25 mm Durchmesser x 5 mm, 80 mg Probe in 5 mL 1,2-Dichlorbenzol).

Gemäß einer vorteilhaften Weiterbildung der Erfindung, weist das hydrierte lösungspolymerisierte Styrol-Butadien-Copolymer eine Glasübergangstemperatur T_{g} von weniger als -25 °C, bevorzugt weniger als -50 °C, auf. Die Bestimmung der Glasübergangstemperatur (T_{g}) der Polymere erfolgt anhand von Dynamischer Differenz-Kalorimetrie (engl. Dynamic Scanning Calorimetry, DSC gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10 °C/min).

Das hydrierte lösungspolymerisierte Styrol-Butadien-Copolymer kann zur Verbesserung weiterer Vulkanisateigenschaften funktionalisiert sein. Die Funktionalisierungen können am Ende der Polymerketten und/oder entlang der Polymerketten vorliegen. Bei den Funktionalisierungen kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte Funktionalisierungen (Modifizierungen) in Frage. Bestandteil solcher Funktionalisierungen können Metallatome sein. Vorzugsweise ist das hydrierte lösungspolymerisierte Styrol-Butadien-Copolymer mit ein aminogruppen- und/oder ammoniumgruppen-enthaltenden Organosilylgruppen, besonders bevorzugt mit ammoniumgruppen-enthaltenden Organosilylgruppen, funktionalisiert.

Die erfindungsgemäße Kautschukmischung enthält weiterhin bis zu 90 phr, vorzugsweise 80 phr, zumindest eines weiteren Dienkautschuks. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei den Dienkautschuken kann es sich z. B. um natürliches Polyisopren und/oder synthetisches Polyisopren und/oder Polybutadien (Butadien-Kautschuk) und/oder Styrol-Butadien-Copolymere (Styrol-Butadien-Kautschuk) mit einem Hydrierungsgrad von weniger als 90 % und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk handeln. Die Kautschuke können als reine Kautschuke oder in ölverstreckter Form eingesetzt werden.

Bevorzugt ist der weitere Dienkautschuk jedoch ausgewählt aus der Gruppe, bestehend aus natürlichem Polyisopren, synthetischem Polyisopren, Polybutadien und weiteren Styrol-Butadien-Copolymeren. Diese Dienkautschuke lassen sich gut zu der Kautschukmischung verarbeiten und ergeben in den vulkanisierten Reifen gute Reifeneigenschaften.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Ferner ist auch ein Gemisch eines oder mehrerer natürlicher Polyisoprene mit einem oder mehreren synthetischen Polyisoprenen denkbar. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden.

Bei dem Butadien-Kautschuk (BR, Polybutadien) kann es sich um alle dem Fachmann bekannten Typen mit einem Mw von 250000 bis 500000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt. Das eingesetzte Polybutadien kann mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem weiteren Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem Mw von 250000 bis 600000 g/mol (zweihundertfünfzigtausend bis sechshunderttausend Gramm pro Mol).

Das oder die eingesetzte(n) weiteren Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Die Kautschukmischung des Body-Bauteils enthält 20 bis 80 phr zumindest eines Füllstoffes. Dabei kann es sich um Füllstoffe, wie Ruße, Kieselsäuren, Alumosilicate, Kreide, Stärke, Magnesiumoxid, Titandioxid oder Kautschukgele in üblichen Mengen handeln, wobei die Füllstoffe in Kombination eingesetzt werden können. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff einsetzbar. Die Füllstoffe sind auch im Gemisch einsetzbar.

Zur Reduzierung des Rollwiderstandes hat es sich als vorteilhaft erwiesen, wenn die Kautschukmischung des Body-Bauteils als Füllstoff Kieselsäure enthält. Es hat sich herausgestellt, dass auch die sogenannten Body-Bauteile Einfluss auf den Rollwiderstand von Reifen haben.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von weniger als 105 m²/g aufweist ("low surface area" Kieselsäure).

Vorzugsweise enthalt die Kautschukmischung 30 bis 700 phr Kieselsäure, um eine gute Verarbeitbarkeit bei guten Reifeneigenschaften zu erzielen.

Zur Verbesserung der Verarbeitbarkeit und zur Anbindung der Kieselsäure an den Dienkautschuk in kieselsäurehaltigen Mischungen wird vorzugsweise zumindest ein Silan-Kupplungsagens in Mengen von 1 - 15 phf (Gewichtsteile, bezogen auf 100 Gewichtsteile Kieselsäure) in der Kautschukmischung des Body-Bauteils eingesetzt.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Menge an Silan-Kupplungsagens mit eingehen.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Gemäß einer alternativen Ausführungsform der Erfindung enthält die Kautschukmischung des Body-Bauteils als Füllstoff nur Ruß, wobei alle dem Fachmann bekannten Ruß-Typen eingesetzt werden können. Bevorzugt wird jedoch in Ruß eingesetzt, der eine Jodadsorptionszahl gemäß ASTM D 1510 von 30 bis 180 g/kg, vorzugsweise von 30 bis 60 g/kg, und eine DBP-Zahl gemäß ASTM D 2414 von 80 bis 200 mL/100 g, vorzugsweise von 80 bis 150 mL/100 g, aufweist.

In der Kautschukmischung für die Body-Bauteile können Weichmacher und Harze in üblichen Mengen enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, wie flüssiges Polybutadien - auch in modifizierter Form - eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung für die Body-Bauteile übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N`-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
e) Verarbeitungshilfsmittel, wie z.B. Fettsäuresalze, wie z.B. Zinkseifen, und Fettsäureester und deren Derivate,
f) Haftsysteme, wie Hexamethoxymethylmelamin (HMMM), Hexamethylentetramin (HMT), Cobaltsalze

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung für die Body-Bauteile wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung für die Body-Bauteile Vulkanisationsverzögerer enthalten.

Als schwefelspendende Substanz können dabei alle dem Fachmann bekannten schwefelspendenden Substanzen verwendet werden. Enthält die Kautschukmischung des Body-Bauteils eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

### Auch weitere netzwerkbildende Systeme, wie sie beispielsweise unter den Handelsnamen

Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung des Body-Bauteils wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung im Fahrzeugluftreifen herstellen.

Die Begriffe "vulkanisiert" und "vernetzt" werden im Rahmen der vorliegenden Erfindung synonym verwendet.

Die Herstellung der Kautschukmischung des Body-Bauteils erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Bei dem erfindungsgemäßen Fahrzeugluftreifen können unterschiedlichste Body-Bauteile die Kautschukmischung mit 10 - 100 phr zumindest eines hydrierten lösungspolymerisierten Styrol-Butadien-Copolymers mit einem Hydrierungsgrad von mehr als 90 %, bis zu 90 phr zumindest eines weiteren Dienkautschuks und 20 - 80 phr zumindest eines Füllstoffes aufweisen. Innerhalb eines Fahrzeugluftreifens kann nur ein Body-Bauteil diese Kautschukmischung aufweisen, es können aber auch mehrere Body-Bauteile eine derartige Kautschukmischung aufweisen.

Bei der Herstellung des erfindungsgemäßen Fahrzeugluftreifens wird die Kautschukmischung für das Body-Bauteil als Fertigmischung vor der Vulkanisation in die entsprechende Form gebracht oder zur Gummierung von Festigkeitsträgern verwendet und bei der Herstellung des Fahrzeugreifenrohlings wie bekannt aufgebracht.

Gemäß einer bevorzugten Ausgestaltung der Erfindung ist das Body-Bauteil eine Gummierung eines Festigkeitsträgers, beispielsweise die Gummierung der Karkasse oder der Gürtelbandage. Die Reifen zeichnen sich durch eine hohe Haltbarkeit hervorgerufen durch eine verbesserte Haftung zwischen der Gummierung und den Festigkeitsträgern aus.

Gemäß einer weiteren bevorzugten Ausgestaltung der Erfindung ist das Body-Bauteil ein Bauteil, welches an der Reifenaußenseite liegt, beispielsweise die Seitenwand oder der Wulstverstärker. Bei diesen Body-Bauteilen wirkt sich das verbesserte Abriebverhalten besonders positiv aus, da diese Bauteile im Fahrbetrieb verstärkt abreibenden Vorgängen unterliegen.

Die Erfindung soll nun anhand der nachstehenden Tabellen 1 bis 3 näher erläutert werden.

Bei den Mischungen der Tabellen wurden unter anderem die Polymere und Füllstoffe hinsichtlich Menge und Art variiert. Die Vergleichsmischungen sind mit V, die erfindungsgemäßen Mischungen sind mit E gekennzeichnet.

Die Mischungsherstellung erfolgte unter üblichen Bedingungen unter Herstellung einer Grundmischung und anschließend der Fertigmischung in einem Labortangentialmischer.

Aus den Mischungen wurden Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN ISO 7619-1
- Rückprallelastizität bei 70 °C gemäß DIN 53 512
- Zugfestigkeit bei Raumtemperatur gemäß DIN 53 504
- Maximaler Verlustfaktor tan δₘₐₓ aus dynamisch-mechanischer Messung bei 55 °C gemäß DIN 53 513, Dehnungsdurchlauf (engl. "strain sweep")
- Abrieb bei Raumtemperatur gemäß DIN ISO 4649

Mit den Mischungen der Tabelle 2 wurden zusätzlich Versuche zur Ozonbeständigkeit anhand folgender Versuchsbeschreibung durchgeführt:
Ozonbeständigkeit bei Raumtemperatur gemäß DIN 53 509 / DIN ISO 1431-1 ähnlichen Bedingungen: Ozonkonzentration 200 pphm +/- 30 pphm, Temperatur 25 °C +/- 3 °C, Luftfeuchtigkeit 60 % +/- 5 %, bei einer statischen Dehnung zwischen 10 und 60 %, wobei die Bewertung in Anlehnung an DIN 53 509 / DIN ISO 1431-1 erfolgte, Bewertung: positiv (keine oder verringerte Rissbildung) oder negativ (ausgeprägte Rissbildung vorhanden)

Mit den Mischungen der Tabelle 3 wurden ferner Haftversuche, so genannte Peel-Tests, gemäß ISO 36:2011 (E) sowie DIN 53 530 mit Auswertung gemäß DIN ISO 6133 an textilen Festigkeitsträgern aus Nylon und Polyester ohne Alterung vorgenommen. Dazu wurden mit RFL-Dip ausgerüstete Festigkeitsträgercorde aus Nylon (940x2 dtex, 80 EPDM) und Polyester (1440x2 dtex, 121 EPDM) mit den unvulkanisierten Kautschukmischungen bedeckt und anschließend 10 min bei 170 °C vulkanisiert. Anschließend wurde die Kraft zum Abschälen der Mischung von den Corden (Haftkraft) bestimmt und die Bedeckung der Corde mit Mischung nach dem Abziehen optisch ermittelt (5: vollständige Bedeckung, 1: keine Bedeckung). Bei der Haftkraft wurden die Werte der Mischungen der ersten Mischungsspalte als 100 % gesetzt; die Werte der anderen Mischungen wurden auf die jeweilige Mischung bezogen.

**Tabelle 1**

| **Bestandteile** | **Einheit** | **1(V)** | **2(V)** | **3(V)** | **4(E)** | **5(V)** | **6(V)** | **7(V)** | **8(E)** | **9(V)** | **10(V)** | **11(V)** | **12(E)** |
|---|---|---|---|---|---|---|---|---|---|---|---|---|---|
| SSBR A^{a)} | phr | 100 | - | 100 | - | 100 | - | 100 | - | 100 | - | 100 | - |
| SSBR B^{b)} | phr | - | 100 | - | 100 | - | 100 | - | 100 | - | 100 | - | 100 |
| Ruß N 339 | phr | 100 | 100 | 50 | 50 | - | - | - | - | - | - | - | - |
| Ruß N 550 | phr | 5 | 5 | 5 | 5 | 5 | 5 | 5 | 5 | 5 | 5 | 5 | 5 |
| Kieselsäure A^{c)} | phr | - | - | - | - | 100 | 100 | 50 | 50 | - | - | - | - |
| Kieselsäure B^{d)} | phr | - | - | - | - | - | - | - | - | 100 | 100 | 50 | 50 |
| Weichmacher, Alterungsschutzmittel | phr | 22,5 | 22,5 | 22,5 | 22,5 | 22,5 | 22,5 | 22,5 | 22,5 | 22,5 | 22,5 | 22,5 | 22,5 |
| Vulkanisationshilfsmittel | phr | 4,5 | 4,5 | 4,5 | 4,5 | 4,5 | 4,5 | 4,5 | 4,5 | 4,5 | 4,5 | 4,5 | 4,5 |
| Silankupplungsagens | phr | - | - | - | - | 10,2 | 10,2 | 5,1 | 5,1 | 5,8 | 5,8 | 2,9 | 2,9 |
| Beschleuniger | phr | 1,3 | 1,3 | 1,3 | 1,3 | 1,3 | 1,3 | 1,3 | 1,3 | 1,3 | 1,3 | 1,3 | 1,3 |
| Schwefel | phr | 3,3 | 3,3 | 3,3 | 3,3 | 3,3 | 3,3 | 3,3 | 3,3 | 3,3 | 3,3 | 3,3 | 3,3 |

| **Eigenschaften** | | | | | | | | | | | | | |
|---|---|---|---|---|---|---|---|---|---|---|---|---|---|
| Härte bei RT | ShoreA | 83,3 | 86,6 | 57,4 | 67,8 | 72,5 | 73,0 | 54,4 | 59,1 | 66,5 | 69,2 | 52,1 | 58,8 |
| Rückprallelast. bei 70 °C | % | 34,7 | 33,0 | 55,0 | 51,3 | 49,0 | 47,3 | 59,8 | 60,6 | 54,6 | 55,3 | 63,8 | 65,4 |
| Zugfestigkeit bei RT | MPa | 12,5 | 21,8 | 13,8 | 21,9 | 17,3 | 22,2 | 11,5 | 20,9 | 14,3 | 23,4 | 9,4 | 20,5 |
| tan δₘₐₓ bei 55 °C | - | 0,348 | 0,365 | 0,168 | 0,190 | 0,184 | 0,202 | 0,120 | 0,127 | 0,154 | 0,163 | 0,107 | 0,105 |
| Abrieb | mm³ | 104 | 102 | 115 | 88 | 94 | 90 | 116 | 82 | 91 | 77 | 125 | 75 |

| | | | | | | | | | | | | | |
|---|---|---|---|---|---|---|---|---|---|---|---|---|---|
| ^{a)} SSBR A, lösungspolymerisiertes, einfach funktionalisiertes Styrol-Butadien-Copolymer, Styrol-Anteil: 20 Gew.-%, Vinyl-Anteil: 54 Gew.-%, Tg = -34 °C, Hydrierungsgrad: 0%, an einem Ende funktionalisiert mit einer ammoniumgruppen-enthaltenden Organosilylgruppe ^{b)} lösungspolymerisiertes, einfach funktionalisiertes Styrol-Butadien-Copolymer, Styrol-Anteil: 34 Gew.-%, Vinyl-Anteil: 24 Gew.-%, Tg = -30 °C, Hydrierungsgrad: 95 %, an einem Ende funktionalisiert mit einer ammoniumgruppen-enthaltenden Organosilylgruppe ^{c)} Zeosil^{®} 1165 MP, BET-Oberfläche = 160 m²/g, Fa. Solvay ^{d)} Zeosil^{®} 1085 GR, BET = 90 m²/g, Fa. Solvay | | | | | | | | | | | | | |

Aus den Daten der Tabelle 1 wird ersichtlich, dass sich die Kautschukmischungen für die Body-Bauteile, die ein SSBR mit einem Hydrierungsgrad von 95 % und eine geringe Menge an Füllstoff enthalten überraschenderweise durch ein verbessertes Abriebverhalten, d. h. durch einen verringerten Abrieb auszeichnen. Dies war keinesfalls zu erwarten, da eine Reduzierung der Füllstoffmenge (hier um jeweils 50 phr) in Mischungen mit einem nicht hydrierten Polymer (SSBR A) zu einer Verschlechterung des Abriebverhaltens, d. h. zu mehr Abrieb führt (s. 1(V) im Vergleich zu 3(V), 5(V) im Vergleich zu 7(V), 9(V) im Vergleich zu 11 (V)). Das deutlich verbesserte Abriebverhalten tritt erst bei Kombination des spezielle SSBR B mit der geringen Füllstoffmenge auf.

Zusätzlich zeichnen sich die erfindungsgemäßen Mischungen durch eine sehr gute Zugfestigkeit und einen geringen tan δₘₐₓ bei 55 °C aus. Letzteres ist ein Indikator für einen verringerten Rollwiderstand bei Verwendung der Mischung in einem Fahrzeugluftreifen.

**Tabelle 2**

| **Bestandteile** | **Einheit** | **13(V)** | **14(E)** | **15(E)** | **16(E)** | **17(E)** |
|---|---|---|---|---|---|---|
| SSBR A^{a)} | phr | 100 | 60 | 40 | 20 | 0 |
| SSBR B^{b)} | phr | 0 | 40 | 60 | 80 | 100 |
| Ruß N339 | phr | 65 | 65 | 65 | 65 | 65 |
| Weichmacher, Alterungsschutzmittel | phr | 20 | 20 | 20 | 20 | 20 |
| Vulkanisationshilfsmittel | phr | 5 | 5 | 5 | 5 | 5 |
| Beschleuniger | phr | 2,5 | 2,5 | 2,5 | 2,5 | 2,5 |
| Schwefel | phr | 3,73 | 3,73 | 3,73 | 3,73 | 3,73 |

| **Eigenschaften** | | | | | | |
|---|---|---|---|---|---|---|
| Härte bei RT | Shore A | 69,50 | 75,00 | 75,70 | 77,05 | 72,10 |
| Rückprallelast. bei 70 °C | % | 57,90 | 52,33 | 51,46 | 49,64 | 51,92 |
| Zugfestigkeit bei RT | MPa | 16,94 | 14,97 | 17,07 | 21,07 | 24,69 |
| tan δ_{maX} bei 55 °C | - | 0,20 | 0,21 | 0,21 | 0,22 | 0,23 |
| Abrieb | mm³ | 116 | 109 | 100 | 92 | 88 |
| Ozonbeständigkeit | - | negativ | positiv | positiv | positiv | positiv |

| | | | | | | |
|---|---|---|---|---|---|---|
| ^{a)} SSBR A, lösungspolymerisiertes, einfach funktionalisiertes Styrol-Butadien-Copolymer, Styrol-Anteil: 20 Gew.-%, Vinyl-Anteil: 54 Gew.-%, Tg = -34 °C, Hydrierungsgrad: 0%, an einem Ende funktionalisiert mit einer ammoniumgruppen-enthaltenden Organosilylgruppe ^{b)} lösungspolymerisiertes, einfach funktionalisiertes Styrol-Butadien-Copolymer, Styrol-Anteil: 34 Gew.-%, Vinyl-Anteil: 24 Gew.-%, Tg = -30 °C, Hydrierungsgrad: 95 %, an einem Ende funktionalisiert mit einer ammoniumgruppen-enthaltenden Organosilylgruppe Auch Tabelle 2 belegt, dass das Abriebverhalten bei Anwesenheit eines SSBR mit einem Hydrierungsgrad von 95 % und eine geringe Menge an Füllstoff verbessert wird. Dies ist für unterschiedlichste Anteile an dem Polymer in der Mischung belegt. Die Mischungen 15(E) bis 17(E) zeichnen sich zusätzlich durch eine ausgezeichnete Ozonbeständigkeit aus, welche schon bei einer Menge von weniger als 100 phr an hydriertem lösungspolymerisiertem Styrol-Butadien-Copolymer mit einem Hydrierungsgrad von mehr als 90 % beobachtet werden konnte. | | | | | | |

**Tabelle 3**

| **Bestandteile** | **Einheit** | **18(V)** | **19(E)** |
|---|---|---|---|
| NR | phr | 80 | 80 |
| SSBR A^{a)} | phr | 20 | - |
| SSBR B^{b)} | phr | - | 20 |
| Ruß N330 | phr | 5,15 | 5,15 |
| Kieselsäure^{c)} | phr | 60 | 60 |
| Weichmacher, Alterungsschutzmittel | phr | 10,5 | 10,5 |
| Vulkanisationshilfsmittel | phr | 8,4 | 8,4 |
| Silankupplungsagens | phr | 5,15 | 5,15 |
| Resorcin | phr | 2,5 | 2,5 |
| HMMM^{e)} | phr | 3,85 | 3,85 |
| Beschleuniger | phr | 1,5 | 1,5 |
| Schwefel | phr | 6,5 | 6,5 |

| **Eigenschaften** | | | |
|---|---|---|---|
| Härte bei RT | Shore A | 80 | 83 |
| Rückprallelast. bei 70 °C | % | 57 | 54 |
| Zugfestigkeit bei RT | MPa | 19,8 | 19,0 |
| tan δₘₐₓ bei 55 °C | - | 0,141 | 0,15 |
| Haftkraft zu Nylon | N/25 mm | 100 | 202 |
| Bedeckung von Nylon | - | 5 | 5 |
| Haftkraft zu Polyester | N/25 mm | 82 | 140 |
| Bedeckung von Polyester | - | 3,5 | 4,5 |

| | | | |
|---|---|---|---|
| ^{a)} SSBR A, lösungspolymerisiertes, einfach funktionalisiertes Styrol-Butadien-Copolymer, Styrol-Anteil: 20 Gew.-%, Vinyl-Anteil: 54 Gew.-%, Tg = -34 °C, Hydrierungsgrad: 0%, an einem Ende funktionalisiert mit einer ammoniumgruppen-enthaltenden Organosilylgruppe ^{b)} lösungspolymerisiertes, einfach funktionalisiertes Styrol-Butadien-Copolymer, Styrol-Anteil: 34 Gew.-%, Vinyl-Anteil: 24 Gew.-%, Tg = -30 °C, Hydrierungsgrad: 95 %, an einem Ende funktionalisiert mit einer ammoniumgruppen-enthaltenden Organosilylgruppe ^{c)} Zeosil^{®} 1165 MP, BET-Oberfläche = 160 m²/g, Fa. Solvay ^{e)} Hexamethoxymethylmelamin, 65 %ig | | | |

Tabelle 3 gibt typische Haftmischungen für gummierte Festigkeitsträger an. Es zeigt sich, dass durch die Anwesenheit des hydrierten lösungspolymerisierten Styrol-Butadien-Copolymers mit einem Hydrierungsgrad von 95 % und niedrigen Füllstoffgehalt im Vergleich zu einer Mischung mit nicht hydriertem Polymer (18(V)) eine deutliche Verbesserung der Haftung sowohl zu Nylon als auch zu Polyester erzielt werden kann. Dies spiegelt sich in der deutlich erhöhten Haftkraft und der verbesserten Bedeckung wider.

## Patentansprüche

1. Fahrzeugluftreifen mit zumindest einem Body-Bauteil, welches eine Kautschukmischung aufweist, die
- 10 - 100 phr (Gewichtsteile, bezogen auf 100 Gewichtsteile der gesamten Kautschuke in der Mischung) zumindest eines hydrierten lösungspolymerisierten Styrol-Butadien-Copolymers mit einem Hydrierungsgrad von mehr als 90 %,
- bis zu 90 phr zumindest eines weiteren Dienkautschuks und
- 20 - 80 phr zumindest eines Füllstoffes enthält,
wobei zu den Body-Bauteilen eines Reifens alle Bauteile des Reifens mit Ausnahme des Laufstreifens zählen.

2. Fahrzeugluftreifen nach Anspruch 1, **dadurch gekennzeichnet, dass** die Kautschukmischung des Body-Bauteils 20 bis 80 phr zumindest eines hydrierten lösungspolymerisierten Styrol-Butadien-Copolymers mit einem Hydrierungsgrad von mehr als 90 % enthält.

3. Fahrzeugluftreifen nach Anspruch 1 oder 2, **dadurch gekennzeichnet, dass** das hydrierte lösungspolymerisierte Styrol-Butadien-Copolymer einen Hydrierungsgrad von mehr als 95 % aufweist.

4. Fahrzeugluftreifen nach zumindest einem der vorhergehenden Ansprüche, **dadurch gekennzeichnet, dass** das hydrierte lösungspolymerisierte Styrol-Butadien-Copolymer funktionalisiert ist.

5. Fahrzeugluftreifen nach zumindest einem der vorhergehenden Ansprüche, **dadurch gekennzeichnet, dass** der weitere Dienkautschuk der Kautschukmischung des Body-Bauteils ausgewählt ist aus der Gruppe, bestehend aus natürlichem Polyisopren, synthetischem Polyisopren, Polybutadien und weiteren Styrol-Butadien-Copolymeren.

6. Fahrzeugluftreifen nach zumindest einem der vorhergehenden Ansprüche, **dadurch gekennzeichnet, dass** die Kautschukmischung des Body-Bauteils als Füllstoff Kieselsäure enthält.

7. Fahrzeugluftreifen nach Anspruch 6, **dadurch gekennzeichnet, dass** die Kieselsäure eine Stickstoff-Oberfläche (BET-Oberfläche) (gemäß DIN ISO 9277 und DIN 66132) von weniger als 105 m²/g aufweist.

8. Fahrzeugluftreifen nach zumindest einem der Ansprüche 1 bis 5, **dadurch gekennzeichnet, dass** die Kautschukmischung des Body-Bauteils als Füllstoff nur Ruß enthält.

9. Fahrzeugluftreifen nach zumindest einem der vorhergehenden Ansprüche, **dadurch gekennzeichnet, dass** das Body-Bauteil eine Gummierung eines Festigkeitsträgers ist.

10. Fahrzeugluftreifen nach zumindest einem der vorhergehenden Ansprüche, **dadurch gekennzeichnet, dass** das Body-Bauteil ein Bauteil ist, welches an der Reifenaußenseite liegt.

## Claims

1. Pneumatic vehicle tire having at least one body component comprising a rubber mixture containing
- 10-100 phr (parts by weight based on 100 parts by weight of the total rubbers in the mixture) of at least one hydrogenated solution-polymerized styrene-butadiene copolymer having a degree of hydrogenation of more than 90%,
- up to 90 phr of at least one further diene rubber and
- 20-80 phr of at least one filler,
wherein the body components of a tire include all components of the tire with the exception of the tread.

2. Pneumatic vehicle tire according to Claim 1, **characterized in that** the rubber mixture of the body component contains 20 to 80 phr of at least one hydrogenated solution-polymerized styrene-butadiene copolymers having a degree of hydrogenation of more than 90%.

3. Pneumatic vehicle tire according to Claim 1 or 2, **characterized in that** hydrogenated solution-polymerized styrene-butadiene copolymer has a degree of hydrogenation of more than 95%.

4. Pneumatic vehicle tire according to any of the preceding claims, **characterized in that** the hydrogenated solution-polymerized styrene-butadiene copolymer is functionalized.

5. Pneumatic vehicle tire according to at least one of the preceding claims, **characterized in that** the further diene rubber of the rubber mixture of the body component is selected from the group consisting of natural polyisoprene, synthetic polyisoprene, polybutadiene and further styrene-butadiene copolymers.

6. Pneumatic vehicle tire according to any of the preceding claims **characterized in that** the rubber mixture of the body component contains silica as filler.

7. Pneumatic vehicle tire according to Claim 6, **characterized in that** the silica has a nitrogen surface area (BET surface area) (according to DIN ISO 9277 and DIN 66132) of less than 105 m²/g.

8. Pneumatic vehicle tire according to at least one of Claims 1 to 5, **characterized in that** the rubber mixture of the body component contains only carbon black as filler.

9. Pneumatic vehicle tire according to at least one of the preceding claims, **characterized in that** the body component is a rubberization of a strength member.

10. Pneumatic vehicle tire according to at least one of the preceding claims, **characterized in that** the body component is a component which is on the tire outer surface.

## Revendications

1. Pneumatique de véhicule comportant au moins un corps-composant, qui présente un mélange de caoutchouc qui contient
- 10 à 100 phr (parties en poids, par rapport à 100 parties en poids des caoutchoucs totaux dans le mélange) d'au moins un copolymère de styrène-butadiène polymérisé en solution hydrogéné comportant un degré d'hydrogénation de plus de 90 %,
- jusqu'à 90 phr d'au moins un caoutchouc de diène supplémentaire et
- 20 à 80 phr d'au moins une charge,
tous les composants du pneu à l'exception de la bande de roulement comptant pour les corps-composants.

2. Pneumatique de véhicule selon la revendication 1, **caractérisé en ce que** le mélange de caoutchouc du corps-composant contient 20 à 80 phr d'au moins un copolymère de styrène-butadiène polymérisé en solution hydrogéné comportant un degré d'hydrogénation de plus de 90 %.

3. Pneumatique de véhicule selon la revendication 1 ou 2, **caractérisé en ce que** le copolymère de styrène-butadiène polymérisé en solution hydrogéné présente un degré d'hydrogénation de plus de 95 %.

4. Pneumatique de véhicule selon au moins l'une quelconque des revendications précédentes, **caractérisé en ce que** le copolymère de styrène-butadiène polymérisé en solution hydrogéné est fonctionnalisé.

5. Pneumatique de véhicule selon au moins l'une quelconque des revendications précédentes, **caractérisé en ce que** le caoutchouc de diène supplémentaire du mélange de caoutchouc du corps-composant est choisi dans le groupe constitué par un polyisoprène naturel, un polyisoprène synthétique, un polybutadiène et d'autres copolymères de styrène-butadiène.

6. Pneumatique de véhicule selon au moins l'une quelconque des revendications précédentes, **caractérisé en ce que** le mélange de caoutchouc du corps-composant contient de l'acide silicique en tant que charge.

7. Pneumatique de véhicule selon la revendication 6, **caractérisé en ce que** l'acide silicique présente une surface à l'azote (surface BET) (selon la norme DIN ISO 9277 et DIN 66132) de moins de 105 m²/g.

8. Pneumatique de véhicule selon au moins l'une quelconque des revendications 1 à 5, **caractérisé en ce que** le mélange de caoutchouc du corps-composant contient seulement de la suie en tant que charge.

9. Pneumatique de véhicule selon au moins l'une quelconque des revendications précédentes, **caractérisé en ce que** le corps-composant est un caoutchoutage d'un support de renforcement.

10. Pneumatique de véhicule selon au moins l'une quelconque des revendications précédentes, **caractérisé en ce que** le corps-composant est un composant qui se trouve au niveau du côté extérieur du pneu.
